# EUROPÄISCHE PATENTSCHRIFT

(11) **EP 3 763 472 B1**
(45) Veröffentlichungstag und Bekanntmachung des Hinweises auf die Patenterteilung: **06.03.2024**
(21) Anmeldenummer: 20184013.9
(22) Anmeldetag: 03.07.2020
(51) Int. Cl.: B23K 26/08, B23K 26/12, B23K 26/351, B23K 26/362, H02G 1/12, B23K 101/32, B23K 101/38

(54) **LASERBEARBEITUNGSVORRICHTUNG UND LASERBEARBEITUNGSVERFAHREN ZUR LASERBEARBEITUNG EINES DRAHTES**
LASER MACHINING DEVICE AND LASER MACHINING METHOD FOR LASER MACHINING OF WIRE
DISPOSITIF D'USINAGE AU LASER ET PROCÉDÉ D'USINAGE AU LASER DESTINÉS À L'USINAGE AU LASER D'UN FIL

(30) Priorität: 08.07.2019 DE 102019118355; 08.07.2019 DE 102019118354
(43) Veröffentlichungstag der Anmeldung: 13.01.2021
(73) Patentinhaber: Grob-Werke GmbH & Co. KG, 87719 Mindelheim (DE)
(72) Erfinder: Metzger, Manfred, 86871 Rammingen (DE)
(74) Vertreter: KASTEL Patentanwälte PartG mbB

(56) Entgegenhaltungen:
- CN-A- 101 997 261
- CN-B- 105 914 664
- DE-A1-102015 119 324
- US-A1- 2003 006 219

## Beschreibung

Die Erfindung betrifft eine Laserbearbeitungsvorrichtung zur Laserbearbeitung eines Drahtes. Weiter betrifft die Erfindung ein Laserbearbeitungsverfahren zur Laserbearbeitung eines Drahtes.

Die CN 105914664 A (offenbarend alle Merkmale des Oberbegriffes der Ansprüche 1 und 10) betrifft eine Laserbearbeitungsvorrichtung und ein Laserbearbeitungsverfahren zum Entfernen von Beschichtungen von 10kV-Hochspannungsleitungen. Um Anschlüsse durchführen zu können, ohne den Strom abzuschalten, wird eine Vorrichtung vorgeschlagen, die mit Hängehaken an die Hochspannungsleitung gehängt werden kann und die einen CO2-Laser und eine Strahlaufteiloptik sowie eine fernsteuerbare Steuereinheit umfasst, mit der die Laseroptik so gesteuert wird, dass die Isolierung von beiden Seiten eingeschnitten wird, um sie zu entfernen.

Die DE 10 2015 119 324 A1 betrifft eine Laserbearbeitungsvorrichtung und ein Laserbearbeitungsverfahren zur Abisolierung von Kabeln mittels eines Laserstrahls. Das Kabel wird durch einen Bearbeitungsbereich geführt, in dem der Laserstrahl sowohl unmittelbar als auch auf einen Umlenkspiegel geleitet wird, um die Bearbeitung von drei Seiten durchzuführen.

Insbesondere bei der Herstellung von Bauteilen, wie z.B. Rotoren oder Statoren, von elektrischen Maschinen, wie insbesondere Elektromotoren und Generatoren werden Leiter in Form von Drähten auf unterschiedliche Art und Weise bearbeitet. Bei einer bekannten Herstellweise werden Drähte, insbesondere Drähte mit unrundem, bevorzugt rechteckigem Querschnitt, die mit einer äußeren Isolierung versehen sind, auf Rollen angeliefert, an vorbestimmten Sektionen abisoliert, geschnitten und zu Leiterelementen, wie z.B. Hairpins (U-förmige Leiter), I-Pins oder Wellenwickeldrähten gebogen, um sie dann in das Bauteil zum Bilden einer Spulenwicklung einzufügen. Hierzu sollen die Drähte zuvor an Schnittstellen abisoliert werden, so dass die durch Schneiden gebildeten Drahtenden zum Verbinden mit anderen Leitern und/oder elektrischen Kontaktieren frei liegen. Eine Möglichkeit zur Abisolierung stellt ein Entfernen der Isolierung durch Laserstrahlung dar. Dabei wird ein Laserstrahl auf die Drahtoberfläche fokussiert. Dabei wird das Isolationsmaterial in Form von Partikeln entfernt, die mit hoher Geschwindigkeit von dem Draht abplatzen und sich in der Umgebung ablagern können. Auch bei anderen Laserbearbeitungen, wie zum Beispiel Abtragverfahren, fällt Material an, das zumindest zeitweise von der Bearbeitungsstelle entfernt werden sollte. Für die Laserbearbeitung werden besonders leistungsfähige und entsprechend teure Industrielaser eingesetzt.

Die Erfindung hat sich zur Aufgabe gestellt, eine Laserbearbeitungsvorrichtung und ein Laserbearbeitungsverfahren zur Verfügung zu stellen, bei denen eine Laserbearbeitung auf entgegengesetzten Seiten eines Drahtes im Zuge einer Großserienfertigung eines Bauteils besonders schnell und dennoch zuverlässig und mit geringem Wartungsaufwand ermöglicht ist.

Zum Lösen dieser Aufgabe schafft die Erfindung eine Laserbearbeitungsvorrichtung und ein Laserbearbeitungsverfahren gemäß den unabhängigen Ansprüchen 1 und 10.

Vorteilhafte Ausgestaltungen sind Gegenstand der Unteransprüche.

Die Erfindung schafft gemäß einem ersten Aspekt davon eine

Laserbearbeitungsvorrichtung zur Laserbearbeitung eines Drahtes (siehe Anspruch 1), mit
einer Drahtführungseinrichtung zum Führen des Drahtes zwecks Bewegung des Drahtes in seiner Längsrichtung durch einen Bearbeitungsbereich und Halten des Drahtes während der Laserbearbeitung,
einer ersten Laserstrahlquelle zum Aussenden eines ersten Laserstrahls in den Bearbeitungsbereich zur Bearbeitung des Drahtes,
einer zweiten Laserstrahlquelle zum Aussenden eines zweiten Laserstrahls in den Bearbeitungsbereich zur Bearbeitung des Drahtes,
wobei die erste Laserstrahlquelle und die zweite Laserstrahlquelle entgegengerichtet zueinander angeordnet sind, um den ersten und den zweiten Laserstrahl auf entgegengesetzte Seiten einer zu bearbeitenden Stelle des Drahtes zu richten, und
einer Blendeneinrichtung mit einer ersten Blende und einer zweiten Blende, die derart gekoppelt bewegbar sind, dass wechselweise einer des ersten und zweiten Laserstrahls in den Bearbeitungsbereich durchgelassen und der andere ausgeblendet wird.

Eine besonders bevorzugte Ausgestaltung der Laserbearbeitungsvorrichtung umfasst ferner:
eine dritte Laserstrahlquelle zum Aussenden eines dritten Laserstrahls in den Bearbeitungsbereich zur Bearbeitung des Drahtes und
eine vierte Laserstrahlquelle zum Aussenden eines vierten Laserstrahls in den Bearbeitungsbereich zur Bearbeitung des Drahtes,
wobei die dritte Laserstrahlquelle und die vierte Laserstrahlquelle entgegengerichtet zueinander angeordnet sind, um den dritten und den vierten Laserstrahl auf weitere entgegengesetzte Seiten der zu bearbeitenden Stelle des Drahtes zu richten,
und wobei die Blendeneinrichtung eine dritte und eine vierte Blende aufweist, die derart gekoppelt bewegbar sind, dass wechselweise einer des dritten und vierten Laserstrahls in den Bearbeitungsbereich durchgelassen und der andere ausgeblendet wird.

Es ist bevorzugt, dass die erste bis vierte Laserstrahlquelle derart angeordnet sind, dass der erste bis vierte Laserstrahl in einer Ebene in den Bearbeitungsbereich strahlen.

Es ist bevorzugt, dass die Anordnung aus erster und zweiter Laserstrahlquelle um einen Winkel von 45 bis 135 Grad, vorzugsweise 60 bis 120 Grad, insbesondere 90 Grad versetzt zu der Anordnung aus dritter und vierter Laserstrahlquelle sind.

Es ist bevorzugt, dass die Blenden der Blendeneinrichtung an einem bewegbaren Hohlkörper ausgebildet sind, in dem Strahlöffnungen zum Durchlassen des jeweiligen Laserstrahls versetzt zueinander angeordnet sind. Vorzugsweise ist der Hohlkörper rotierbar und/oder in Längsrichtung verschiebbar angeordnet.

Es ist bevorzugt, dass die Blenden der Blendeneinrichtung an einem bewegbaren Rohrkörper ausgebildet sind, in dem Strahlöffnungen zum Durchlassen des jeweiligen Laserstrahls versetzt zueinander angeordnet sind. Insbesondere ist der Hohlkörper als Rohrkörper ausgebildet. Vorzugsweise ist der Rohrkörper rotierbar und/oder in Längsrichtung verschiebbar angeordnet.

Es ist bevorzugt, dass die Blenden der Blendeneinrichtung an einem längs der Drahtbewegungsrichtung bewegbaren Schieber ausgebildet sind. Der Schieber kann z.B. den Hohlkörper oder Rohrkörper aufweisen oder bilden.

Es ist bevorzugt, dass die Blenden der Blendeneinrichtung durch eine Blendenbewegungseinrichtung gemeinsam bewegbar sind.

Es ist bevorzugt, dass die Blenden an der Drahtführungseinrichtung bewegbar geführt sind.

Es ist bevorzugt, dass ein Positionssensor oder ein erster und ein zweiter Positionssensor zum unmittelbaren Erfassen einer Position der Blenden oder eines Hohlkörpers oder Schiebers, an dem die Blenden ausgebildet sind, vorgesehen sind.

Es ist bevorzugt, dass die Blenden an dem als Hohlkörper ausgebildeten Schieber angeordnet sind, der in Schieberbewegungsrichtung versetzt zueinander angeordnete Strahlöffnungen für den jeweiligen Laserstrahl aufweist.

Es ist bevorzugt, dass die Blendenbewegungseinrichtung einen Zylinder zur pneumatischen oder hydraulischen Betätigung mit einer Kolbenstange aufweist, an der der Schieber befestigt ist. Die Blendenbewegung kann bei einigen Ausführungsformen auch elektrisch erfolgen. Allgemein kann ein Aktor zur Betätigung der Blendenbewegung vorgesehen sein.

Eine bevorzugte Ausgestaltung der Laserbearbeitungsvorrichtung umfasst ferner: ein Hauptrohr, in dem die Drahtführungseinrichtung, der Bearbeitungsbereich und die Blendeneinrichtung untergebracht sind, und eine Strömungserzeugungseinrichtung zur Erzeugung einer Gasströmung durch das Hauptrohr. Unter Hauptrohr, auch Zentralrohr genannt, wird ein ein- oder mehrteiliges Rohr oder Rohrsystem mit wenigstens einem Einlass und wenigstens einem Auslass verstanden, das ansonsten gegenüber der Umgebung abgedichtet ist, durch das eine Gasströmung hindurchgeleitet werden kann und das als Gehäuse der Laserbearbeitungsvorrichtung dient.

Das Hauptrohr ist vorzugsweise länglich ausgebildet und erstreckt sich vorzugsweise in Bewegungsrichtung des Drahtes. Vorzugsweise wird die Gasströmung durch Einleiten von Gas in den wenigstens einen Einlass und durch Ableiten von Gas durch den wenigstens einen Auslass erzeugt.

Es ist bevorzugt, dass die Drahtführungseinrichtung an einem Endbereich des Hauptrohrs einen Drahtführungseinlauf zum Einführen des Drahtes in das Hauptrohr und an einem anderen Endbereich des Hauptrohrs einen Drahtführungsauslauf zum Herausführen des Drahtes aus dem Hauptrohr aufweist. Vorzugsweise reicht der Draht im Betrieb durch das Hauptrohr hindurch und wird durch das Hauptrohr zur Bearbeitung taktweise gefördert.

Es ist bevorzugt, dass Schutzgläser zum Durchführen des jeweiligen Laserstrahls zu dem Bearbeitungsbereich vorgesehen sind. Insbesondere sind an dem Hauptrohr oder an Anbauteilen des Hauptrohrs oder Anbauteilen an dem Hauptrohr Schutzgläser vorgesehen.

Es ist bevorzugt, dass die Strömungserzeugungseinrichtung wenigstens eine Wirbeldüse zum Erzeugen eines Strömungswirbels an wenigstens einer Innenseite eines Schutzglases aufweist.

Es ist bevorzugt, dass je eine kontrahierbare und expandierbare Umhüllung zum Abdichten des Bereiches zwischen Schutzglas und Bearbeitungsbereich vorgesehen ist. Vorzugsweise ist die Umhüllung aus einem flexiblen Material ausgebildet. Bei anderen Ausgestaltungen kann die Umhüllung ein Teleskopelement umfassen.

Gemäß einem weiteren Aspekt schafft die Erfindung ein

Laserbearbeitungsverfahren zur Laserbearbeitung eines Drahtes (siehe Anspruch 10) umfassend taktweises Bewegen eines Drahtes durch einen Bearbeitungsbereich, Ausrichten einer ersten Laserstrahlquelle zum Leiten eines ersten Laserstrahls auf eine erste Seite einer zu bearbeitenden Stelle des Drahtes,

Ausrichten einer zweiten Laserstrahlquelle zum Leiten eines zweiten Laserstrahls auf eine der ersten Seite entgegengesetzte zweite Seite der zu bearbeitenden Stelle des Drahtes, so dass der erste und der zweite Laserstrahl entgegengerichtet zueinander in den Bearbeitungsbereich gerichtet sind, Aussenden des ersten Laserstrahls und gleichzeitiges Ausblenden des zweiten Laserstrahls und danach Aussenden des zweiten Laserstrahls und Ausblenden des ersten Laserstrahls, wobei eine erste Blende und eine zweite Blende einer Blendeneinrichtung gekoppelt bewegt werden, um wechselweise einen des ersten und des zweiten Laserstrahls in den Bearbeitungsbereich durchzulassen und den anderen auszublenden.

Es ist bevorzugt, dass eine erste bis vierte Laserstrahlquelle derart ausgerichtet werden, dass ein erster bis vierter Laserstrahl in einer Ebene von verschiedenen Seiten auf den Draht gerichtet werden, und
dass Laserstrahlen benachbarter Laserstrahlquellen auf den Draht ausgesandt werden, während die Laserstrahlen der jeweils gegenüberliegenden Laserstrahlquellen ausgeblendet werden.

Erfindungsgemäß erfolgt das Ausblenden mittels einer Blendeneinrichtung. Vorzugsweise erfolgt das taktweise Bewegen mittels einer Drahtführungseinrichtung.

Es ist bevorzugt, dass eine Beschichtung des Drahtes mittels der Laserstrahlen entfernt wird und dass Partikel, die bei der Entfernung abplatzen, durch ein Hauptrohr abgesaugt werden.

Vorzugsweise erfolgt das taktweise Bewegen, das Ausblenden und das Bearbeiten in dem Hauptrohr, durch das hindurch eine Gasströmung geleitet wird. Es ist bevorzugt, dass der Draht durch das Hauptrohr hindurchgeführt wird. Besonders ist bevorzugt, dass der Draht an einem Endbereich des Hauptrohrs in das Hauptrohr eingeführt und an einem anderen Endbereich des Hauptrohrs aus dem Hauptrohr herausgeführt wird.

Es ist bevorzugt, dass an wenigstens einem Schutzglas, durch das ein Laserstrahl eintritt, eine Wirbelströmung erzeugt wird, die in einen Absaugstrom eingeleitet wird.

Vorzugsweise ist das Schutzglas an dem Hauptrohr oder an einem Anbauteil des Hauptrohres angeordnet.

Die Erfindung betrifft insbesondere die Laserbearbeitung von Leitern, wie insbesondere Drähten. Mehr insbesondere betrifft die Erfindung eine Beschichtungsentfernung mittels Strahlbearbeitung, wie insbesondere Laserbearbeitung. Ein Aspekt besonderer Ausführungsformen der Erfindung betrifft auch eine Partikelentsorgung bei einer Beschichtungsentfernung. Beispielsweise entstehen Partikel bei der Entfernung von Drahtbeschichtungen.

Bei Ausgestaltungen der Erfindung wird die Beschichtung von Drähten zum Beispiel mittels Laser oder sonstiger Strahlung entfernt. Wenn zum Beispiel rechteckige Drähte zu bearbeiten sind, dann ist hierzu pro Seite ein Laservorgang erforderlich.

Die für solche Laserbearbeitungen eingesetzten Laserstrahlquellen stellen ein hohes Investitionsvolumen dar und sind daher besonders umsichtig zu behandeln. Insbesondere sollten die Laserstrahlquellen außerhalb des Einstrahlungsbereiches von Laserstrahlen anderer Laserstrahlquellen angeordnet werden. Bei bisherigen internen Lösungsansätzen waren sich gegenüberliegende Laserstrahlquellen zur Bearbeitung von entgegengesetzten Seiten der Drähte in Längsrichtung der Drähte versetzt zueinander angeordnet. Wenn nun ein Draht an einer Stelle rundum von seiner Beschichtung zu befreien war, dann wurde der Draht in einem ersten Takt mit dieser Stelle in den Bearbeitungsbereich einer ersten Laserstrahlquelle eingefahren, dort mittels dem ersten Laserstrahl bearbeitet, und dann in einem weiteren Takt zu einer in Bewegungsrichtung entfernten zweiten Bearbeitungsstelle weitergefahren, um dort mit dem zweiten Laserstrahl bearbeitet zu werden.

Bei der Erfindung ist nun jedoch vorgesehen, dass sich gegenüberstehende Laserstrahlquellen etwa in einer Ebene quer zum Draht angeordnet werden. Somit kann der Draht an ein und derselben zu bearbeitenden Stelle auch von gegenüberliegenden Laserstrahlen bearbeitet werden. Um die sich gegenüberliegenden Laserstrahlquellen von jeweils anderer Laserstrahlung zu schützen, ist eine Blendeneinrichtung vorgesehen, die jeweils einen der sich gegenüberliegenden Laserstrahlen ausblendet. Eine derartige Blende kann durch gesonderte Mechanismen zwischen einem Bewegungstakt des Drahtes sehr schnell bewegt werden.

Somit kann der Draht mit der zu bearbeitenden Stelle in einem Takt in den Bearbeitungsbereich gefahren werden. Dann kann ein erster Laserstrahl oder eine Gruppe von nicht zueinander entgegengesetzten Laserstrahlen, - zum Beispiel ein erster und ein dritter in einem Winkel von z. B. 90 Grad zueinander ausgerichteter Laserstrahl - auf den Draht gerichtet werden, wobei die Laserstrahlen der anderen, jeweils gegenüberliegenden Laserstrahlquellen mittels der Blendeneinrichtung ausgeblendet werden. Dann wird die Blendeneinrichtung bewegt, die bisher aktiven Laserstrahlquellen werden ausgeblendet, und es können die Laserstrahlen der anderen Laserstrahlquellen auf den Draht gerichtet werden. Diese zweifache Bestrahlung kann innerhalb eines Bewegungstaktes des Drahtes erfolgen.

Demnach werden zur Taktzeitreduzierung bei bevorzugten Ausgestaltungen zweckmäßig vier Laserstrahlquellen, insbesondere vier Laser in einer Ebene quer zum Draht angeordnet.

Zweckmäßigerweise wird bei dieser Anordnung der jeweils gegenüber positionierte passive Laser vor Bestrahlung durch den aktiven Laser mittels einer zustellbaren Blende geschützt.

Dient die Laserbearbeitung zum Materialabtrag, wie zum Beispiel zum Abtragen von Beschichtungen und insbesondere Isolierungen, dann prallen beim Entfernen Partikel oft mit hoher Geschwindigkeit ab.

Um die Laserstrahlquelle vor Partikeleinstrahlung zu schützen, befindet sich vorzugsweise vor der Laserstrahlquelle ein Schutzglas.

Vorzugsweise wird das Schutzglas mittels einer Düse von Verunreinigungen befreit. Hierzu befindet sich weiter vorzugsweise die Bearbeitungsstelle innerhalb eines Absaugungsstroms, so dass ein Saugmedium die Partikel entfernen und absaugen kann.

So können Partikel samt Schmauch quer abgeblasen werden. Hierzu ist vorzugsweise ein Hauptrohr vorgesehen, welches derart verläuft, dass es den Draht umhüllt und zur verbesserten Absaugung der Partikel samt Schmauch dient.

Bei bisherigen Ansätzen hat man mit Schutzgläsern versehene Fenster sehr nahe am Bearbeitungsbereich vorgesehen. Versuche haben jedoch ergeben, dass bei naher Anordnung von Fenstern diese durch Partikelbeschuss relativ schnell erblinden können.

Bei besonders bevorzugten Ausgestaltungen der Erfindung ist somit zwischen dem Bearbeitungsbereich und dem Schutzglas eine flexible Umhüllung vorgesehen. Durch die Umhüllung wird die axiale Strecke zwischen Bearbeitungsbereich und Schutzglas vergrößert, so dass die Schutzgläser außerhalb des Hochgeschwindigkeitsbereichs der Partikel angeordnet werden können. Zusätzlich kann die Umhüllung (Schutzkappe) dichten, so dass der Raum zwischen Schutzglas und Hauptrohr im Absaugungsbereich liegt und Partikel abgesaugt werden können.

Vorzugsweise ist im Bereich des Schutzglases wenigstens eine Düse vorgesehen, durch die Absaugungsmedium eintreten kann. So lässt sich eine Strömung weg von dem Schutzglas in den Absaugungsbereich erzeugen.

Besonders bevorzugt ist die Düse derart ausgebildet, dass auf der dem Bearbeitungsbereich zugewandten Seite des Schutzglases eine Verwirbelung erfolgt. Dies kann insbesondere durch eine Ringdüse geschehen. Die Verwirbelung in Zusammenhang mit dem Absaugstrom führt dazu, dass Partikel effektiv von dem Schutzglas ferngehalten werden. Die Flexibilität der Umhüllung stellt sicher, dass das Schutzglas zu Einstellungszwecken zusammen mit der Laserstrahlquelle bewegbar ist und so relativ zu dem Hauptrohr beweglich angeordnet werden kann. So kann das Schutzglas am Ausgang einer Strahloptik einer Laserstrahlquelle mit dieser verbunden werden. Insbesondere kann die Laserstrahlquelle an einer Blende, in der das Schutzglas und eventuell die Wirbelstromerzeugungseinrichtung, insbesondere in Form einer Ringdüse, untergebracht ist, befestigt werden, wobei eine Positioniereinrichtung zum Positionieren der Laserstrahlquelle relativ zu dem Hauptrohr und somit zu dem Bearbeitungsbereich die Blende oder Halterung dient.

Das Hauptrohr wird so durch die Umhüllung, die Blende und das Schutzglas abgedichtet.

Aufgrund der Umhüllung kann das Schutzglas weiter entfernt von dem Bearbeitungsbereich angeordnet werden. Versuche habe gezeigt, dass die vom Draht abplatzenden Partikel bis zum Auftreffen auf das Schutzglas am Strahlwerkzeug so viel kinetische Energie verlieren, dass das Schutzglas nicht beschädigt wird.

Die Halterung für das Schutzglas wird am Strahlwerkzeug fixiert.

Die Blendeneinrichtung zum Ausblenden des passiven Lasers kann unterschiedlich aufgebaut sein. Besonders bevorzugt ist ein Rohrkörper, insbesondere in Form eines Schiebers, welcher in Drahtbewegungsrichtung hin und her beweglich ist und entsprechende Öffnungen und Blenden zum Durchlassen oder Ausblenden des zugeordneten Laserstrahls aufweist. Durch die Bewegung des Schiebers in Drahtbewegungsrichtung - insbesondere axial zu einem Hauptrohr - lässt sich eine besonders einfach und unkompliziert integrierbare Bewegungsmechanik vorsehen.

Selbstverständlich sind auch andere Bewegungsmechanismen möglich. Bei einer Variante wird zum Beispiel eine entsprechend modifizierte Lochblende nicht verschoben, sondern geschwenkt. Auch eine kombinierte Schiebe-Schwenkbewegung ist möglich.

Vorzugsweise ist der neue Aufbau der Laserbearbeitungsvorrichtung nach außen hin dicht bezüglich Laserstrahlung, Partikel und Schmauch. Somit kann eine aufwändige Schutzeinhausung mit eventuell elektrisch abgesicherter Schutztür entfallen oder zumindest auf eine wesentlich einfachere Einhausung reduziert werden. Die Laserbearbeitungsvorrichtung ist besonders wartungsfrei, insbesondere fallen gegenüber bisherigen Ansätzen einige Verschleißteile - zum Beispiel nah an dem Bearbeitungsbereich vorgesehene Fenster - weg.

Die Blendeneinrichtung kann sehr einfach aufgebaut sein. Es kann eine einzige Lochblende vorgesehen werden. Diese kann durch einen einfachen Mechanismus, insbesondere einen Zylinder oder dergleichen bewegt werden. Beispielsweise ist eine einstückige Lochblende mit einem Pneumatikzylinder vorgesehen.

Um auch bei hoher Geschwindigkeit sicherzustellen, dass kein Laserstrahl in eine gegenüberliegende Laserstrahlquelle eintritt, ist bei bevorzugten Ausgestaltungen eine Positionserfassung zum unmittelbaren Erfassen der Position der Blenden der Blendeneinrichtung vorgesehen. Sind die Blenden an einem gemeinsamen Hohlkörper, wie insbesondere Schieber oder dergleichen vorgesehen, dann kann beispielsweise die Position dieses Hohlkörpers unmittelbar erfasst werden. Hier können zum Beispiel Hall-Sensoren, oder Kontaktsensoren oder Schalter, welche durch einen entsprechenden Kontakt des Schiebers in der jeweils zu erfassenden Position betätigt werden, vorgesehen werden. Beispielsweise können zwei Endschalter vorgesehen werden. Der Laserstrahl des jeweils zu aktivierenden Lasers wird nur dann ausgesandt, wenn der zugeordnete Endschalter die korrekte Endposition der entsprechenden Blende anzeigt.

Eine bevorzugte Ausgestaltung sieht eine erste bis vierte Laserquelle in einer Ebene vor.

Vorzugsweise sind in einem Hauptrohr ein erstes bis viertes Schutzfenster mit Glas integriert. Das Schutzglas an der Laserstrahlquelle wird gegen Beschuss von der gegenüber angeordneten Laserstrahlquelle mittels einer Blende gesichert.

Mittels einer Düse, insbesondere Ringdüse, werden Partikel abgeblasen, bevor sie die Schutzfenster erreichen können.

Vorzugsweise werden über das Hauptrohr die Partikel und der Schmauch abgesaugt.

Die Verwendung einer Ringdüse hat den Vorteil, dass hiermit eine Verwirbelung erzeugt wird, die nur ein geringes Blasmediumvolumen benötigt, um die Partikel von dem Schutzglas fernzuhalten.

Ausführungsbeispiele der Erfindung werden im Folgenden anhand der beigefügten Zeichnungen näher erläutert. Darin zeigt:
- Fig. 1: eine teils geschnittene perspektivische Darstellung einer Laserbearbeitungsvorrichtung zur Laserbearbeitung eines Drahtes;
- Fig. 2: einen Schnitt entlang einer horizontalen Mittellängsebene durch die Laserbearbeitungsvorrichtung;
- Fig. 3: einen vergrößerten Teil eines Querschnitts quer zur Längsrichtung der Laserbearbeitungsvorrichtung;
- Fig. 4: eine Ansicht auf die Laserbearbeitungsvorrichtung von rechts in Fig. 1 gesehen;
- Fig. 5: eine weitere perspektivische Schnittdarstellung der Laserbearbeitungsvorrichtung;
- Fig. 6: eine perspektivische Darstellung eines zentralen Bereichs der Laserbearbeitungsvorrichtung; und
- Fig. 7: eine weitere teils geschnittene Darstellung eines Details der Laserbearbeitungsvorrichtung, wobei ein Schnitt durch eine Ringdüse an einer Halterung für ein Schutzglas gezeigt ist

Die Figuren zeigen unterschiedliche Ansichten einer Ausführungsform einer Laserbearbeitungsvorrichtung 10 zur Laserbearbeitung eines Drahtes 70. Die Laserbearbeitungsvorrichtung 10 ist dazu ausgebildet, eine Beschichtung des Drahtes 70 mittels Laserstrahlung zu entfernen. Insbesondere ist die Laserbearbeitungsvorrichtung 10 zum Abisolieren eines Bereichs des Drahtes 70 ausgebildet. Die Laserbearbeitungsvorrichtung 10 ist zur Laserbearbeitung eines im Querschnitt rechtwinkligen Drahtes 70 ausgebildet. Nach dem Abisolieren soll der Draht 70 insbesondere an den Sektionen, wo die Isolierung entfernt worden ist, geschnitten werden, wobei die abgeschnittenen Drahtstücke zum Bilden von Leitern eines Bauteils einer elektrischen Maschine verwendet werden sollen. Bei einer Ausgestaltung sollen aus den Drahtstücken U-förm ig gebogene Leiter, sogenannte Hairpins, oder gerade gebogene Leiter, sogenannte I-Pins gebildet werden. Bei anderen Ausgestaltungen werden aus den Drahtstücken Flachwellenwicklungen ausgebildet.

Die Laserbearbeitungsvorrichtung 10 weist eine Drahtführungseinrichtung 12, eine erste bis vierte Laserstrahlquelle 14a-14d und eine Blendeneinrichtung 16 auf. Weiter weist die Laserbearbeitungsvorrichtung 10 ein Hauptrohr 18 und eine Strömungserzeugungseinrichtung 20 auf.

Die Drahtführungseinrichtung 12 ist innerhalb des Hauptrohres 18 mittig vorgesehen und zum Führen des Drahtes 70 derart ausgebildet, dass der Draht 70 in seiner Längsrichtung durch einen Bearbeitungsbereich 22 zur Bearbeitung des Drahtes 70 bewegt werden kann und während der Laserbearbeitung gehalten werden kann. Hierzu wird der Draht 70 taktweise durch die Drahtführungseinrichtung 12 bewegt und zur Laserbearbeitung angehalten. Die Drahteinführungseinrichtung 12 weist einen Drahtführungseinlauf 24 und einen Drahtführungsauslauf 26 auf.

Der Drahtführungsauslauf 26 ist in Bewegungsrichtung des Drahtes 70 nach dem Bearbeitungsbereich 22 angeordnet, als rohrförmiges Element ausgebildet und weist einen konzentrisch mit seiner Längsachse zusammenfallenden Drahtführungskanal 28 auf.

Zumindest ein Bereich des Drahtführungsauslaufs 26 ist insbesondere als Kolbenstange 30 ausgebildet und in seiner Längsrichtung beweglich in einer ersten und zweiten Führung 32a, 32b geführt. Die erste Führung 32a und die zweite Führung 32b sind z. B. als Begrenzungswände eines Zylinders 34 ausgebildet, in dem ein an der Kolbenstange 30 angebrachter Kolben 36 angetrieben durch ein Arbeitsmedium wie ein Druckgas oder ein Hydraulikmedium bewegbar ist.

Der Drahtführungskanal 28 weist an den Enden der Kolbenstange 30 engere Bereiche 38c, 38d auf, an denen der Draht anliegt und positioniert wird. Zwischen den engeren Bereichen 38a, 38b ist der Drahtführungskanal 28 breiter ausgebildet. Außerhalb des Zylinders 34 weist der als Kolbenstange 30 ausgebildete Drahtführungsauslauf 24 einen Sperrluftanschluss 40 für Sperrluft (Beispiel für ein Absaugmedium) auf.

Das dem Bearbeitungsbereich 22 zugewandte Ende der Kolbenstange 30 ist zur Befestigung eines als Hohlkörper 42, insbesondere Rohrkörper ausgebildeten Schiebers 44 der Blendeneinrichtung 16 ausgebildet. Hier ist der Außenumfang der Kolbenstange 30 unrund, z. B. als Vierkant angeführt, worauf der Schieber 44 mit einer entsprechenden Kontur verdrehsicher aufliegt.

Der dem Bearbeitungsbereich 22 zugewandte erste engere Bereich 38a ist an einem Mundstück 46 ausgebildet, welches lösbar an diesem Ende der Kolbenstange 30 befestigt ist. Beispielsweise ist das Mundstück 46 auf ein Gewinde an der Kolbenstange 30 aufgeschraubt. Das Mundstück 46 dient zum Führen des Drahtes 70 und ist somit ein Verschleißteil, welches aufgrund der lösbaren Befestigung leicht ausgetauscht werden kann. Das Mundstück 46 kann gleichzeitig zur Fixierung des Schiebers 44 dienen.

Der Drahtführungseinlauf 24 ist bei der dargestellten Ausführungsform an dem Hauptrohr 18 fixiert. Bei der dargestellten Ausführungsform weist der Drahtführungseinlauf 24 einen einstückig mit einem Abschnitt des Hauptrohrs 18 ausgebildeten Rohrbereich 48 mit einem trichterförmigen Einlaufbereich 49 auf. Auch an den Enden des Drahtführungseinlaufes 24 sind jeweils engere Bereiche 50a, 50b zum Positionieren des Drahtes 70, beispielsweise auf der zentralen Längsachse des Hauptrohrs 18, ausgebildet.

So kann der Draht 70 durch den in dem Rohrbereich 48 ausgebildeten Drahtführungskanal 52 in den Bearbeitungsbereich 22 hinein und durch den Drahtführungskanal 28 des Drahtführungsauslaufs 26 wieder aus der Laserbearbeitungsvorrichtung 10 hinausgeführt werden.

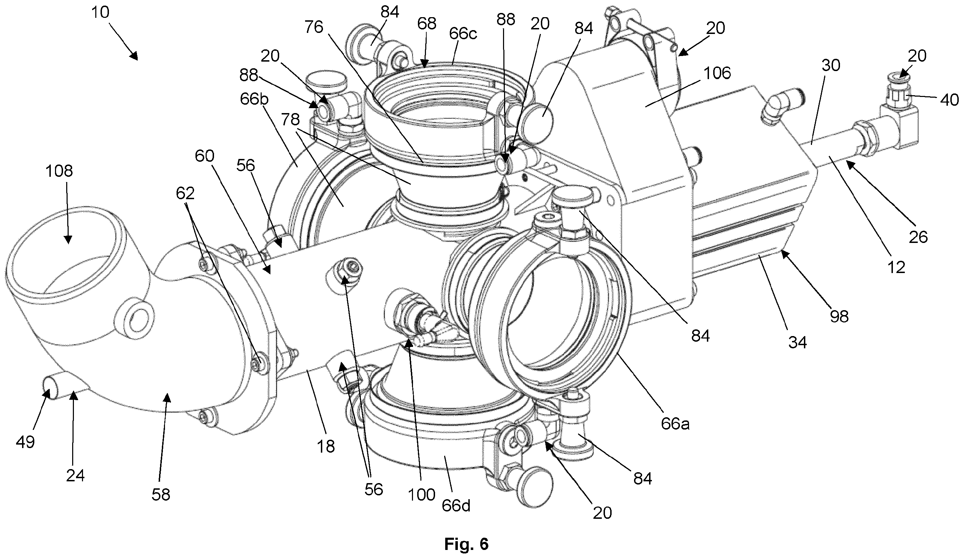

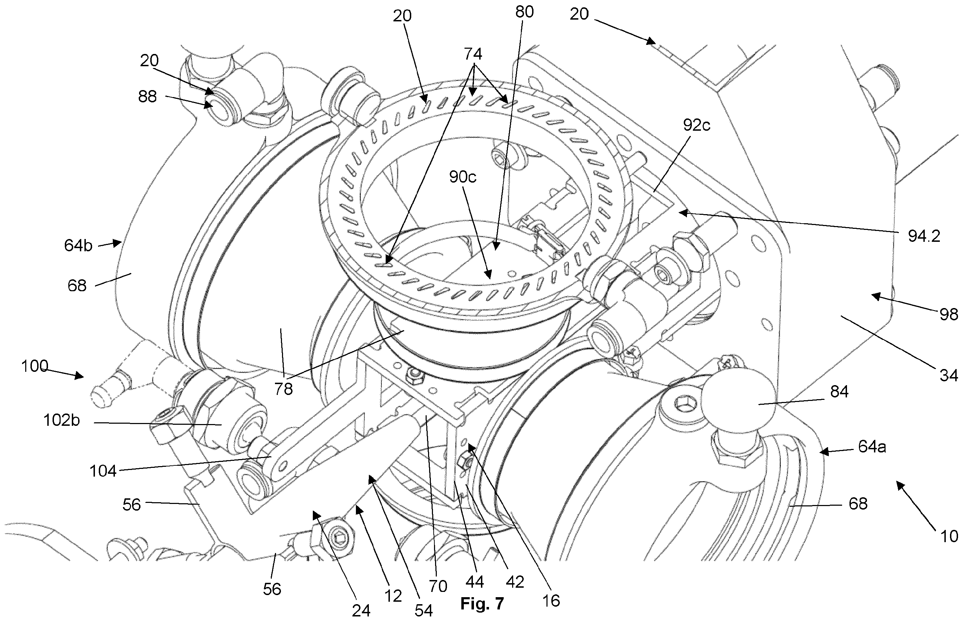

Der Drahtführungseinlauf 26 befindet sich in Drahtbewegungsrichtung vor dem Bearbeitungsbereich 22 und weist ein konisch auslaufendes Führungsmundstück 54 auf, welches ebenfalls lösbar an dem Rohrbereich 48 befestigt ist. Das Führungsmundstück 54 oder das dem Bearbeitungsbereich 22 zugewandte Ende des Rohrbereichs 48 sind mittels wenigstens eines Verbindungssteges 56, vorzugsweise mittels eines ersten und zweiten Verbindungssteges 56 mit der Wandung des Hauptrohres 18 verbunden. Bei der dargestellten Ausführungsform ist das Führungsmundstück 54 mit den Verbindungsstegen 56 an die Wandungen des Hauptrohres 18 befestigt, wie dies in Fig. 6 von außen und in Fig. 7 von innen gezeigt ist.

Der Rohrbereich 48 ist an einem Endabschnitt 58 des Hauptrohres 18 einstückig ausgebildet. Der Endabschnitt 58 ist mit einem Zentralabschnitt 60 des Hauptrohres 18 lösbar, beispielsweise über Schrauben 62 verbunden.

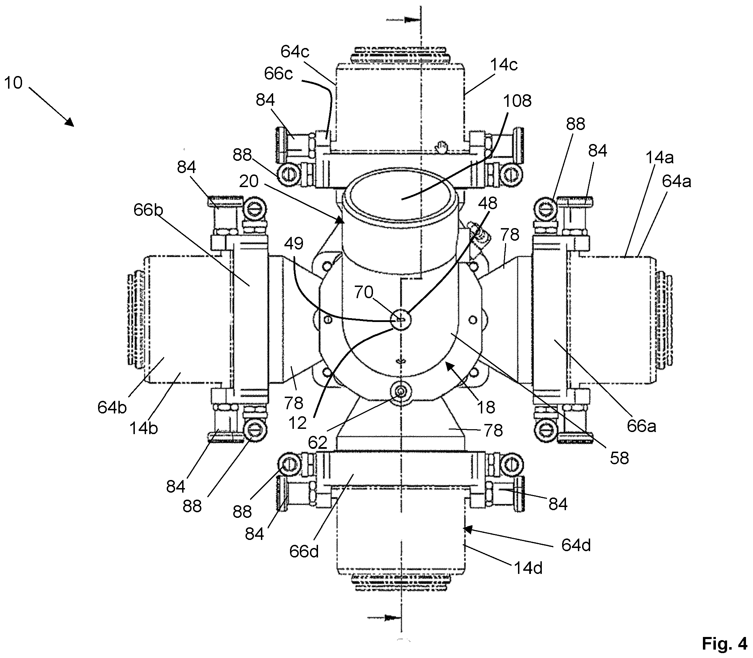

Wie am besten aus Fig. 4 ersichtlich, weisen die erste bis vierte Laserstrahlquelle 14a-14d jeweils einen Laser mit Laseroptik 64a-64d sowie jeweils eine Halteeinrichtung 66a-66d auf.

Die Laser 64a-64d sind Beispiele für ein Strahlwerkzeug zum Erzeugen einer Bearbeitungsstrahlung zum Bearbeiten des Drahtes 70. Insbesondere ist jeder Laser 24a-24d zur Erzeugung eines entsprechenden Laserstrahles ausgebildet, der auf die Oberfläche des in dem Bearbeitungsbereichs 22 zur Laserbearbeitung gehaltenen Drahtes 70 zu fokussieren ist. Die Laser 64a-64d sind in nicht näher dargestellter Weise autonom befestigt und selbständig in und gegen die Strahlrichtung verstellbar, um den Fokus einzustellen.

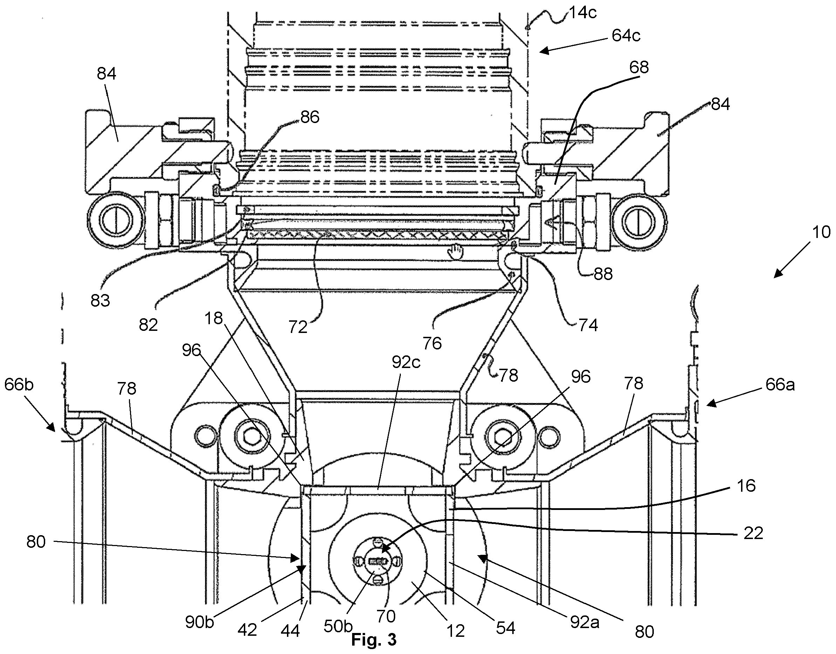

Die Halteeinrichtung 66a-66d ist zur Befestigung eines Schutzglases 72 an dem Laser 64a-64d ausgebildet. Die dritte Halteeinrichtung 66c ist im Detail in Fig. 3 dargestellt, die anderen haben einen entsprechenden Aufbau, der im Folgenden anhand des Beispiels der dritten Halteeinrichtung 66c beschrieben wird. Wie aus Fig. 3 ersichtlich, weist die Halteeinrichtung 66c einen ringförmigen Halter 68 auf.

In dem ringförmigen Halter 68 ist das Schutzglas 72 befestigt. Der Halter 68 weist auf der dem Bearbeitungsbereich 22 zugewandten Seite des Schutzglases 72 eine insbesondere als Ringdüse 74 ausgebildete Wirbeldüse zum Erzeugen eines Strömungswirbels an der dem Bearbeitungsbereich 22 zugewandten Innenseite des Schutzglases 72 auf.

Die Ringdüse 74 sitzt in einem Ringflansch 76, an dem eine flexible Umhüllung 78 befestigt ist. Die flexible Umhüllung 78 ist trichterförmig aus einem flexiblen, aber luftdichten Material, wie beispielsweise einem Polymermaterial ausgebildet und schließt den Raum zwischen der Innenseite des Schutzglases 72 und einer Einstrahlungsöffnung 80 des Hauptrohrs 18 luftdicht ab.

An dem Halter 68 ist weiter auf der dem Laser 64c zugewandten Seite eine Dichtung 82 für das Schutzglas 72 sowie ein Verschluss 83 für das Schutzglas vorgesehen. Zur Befestigung des Halters an dem Laser 64c (oder dessen Optik) dient ein Schnellverschluss 84. Auch kann eine Dichtung 86 zum Abdichten des Strahlwerkzeuges vorgesehen sein.

Die Laser 64a-64d sind in den Zeichnungen lediglich angedeutet, wobei auch nur die Laseroptik, an welcher die Halteeinrichtung 66a-66d zu befestigen ist, gezeigt sind. Die Laser 64a-64d können ganz unterschiedliche Gestalt haben, solange durch Positionierung der Laseroptik eine exakte Einleitung und Fokussierung des zugeordneten Laserstrahls auf die Drahtoberfläche ermöglicht ist. Aufgrund der flexiblen Umhüllung 78 kann die Halteeinrichtung 66a-66d einer Einstellbewegung des Lasers 64a-64a folgen, wobei der Raum zwischen der Innenseite des Schutzglases 72 und der Einstrahlungsöffnung 80 des Hauptrohrs 18 luftdicht abgeschlossen bleibt.

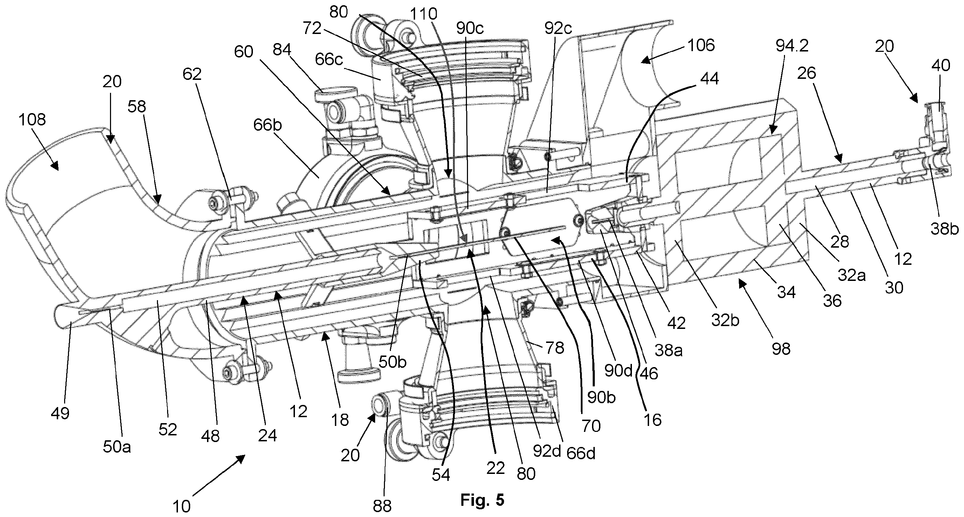

In Fig. 5 ist weiter mit den Bezugszeichen 88 noch ein Luftanschluss für die Ringdüse 74 bezeichnet.

Die erste Laserstrahlquelle 14a und die zweite Laserstrahlquelle 14b sind gegenüberliegend angeordnet, so dass entgegengesetzte Seiten des Drahtes 70 70 bearbeitet werden können. Weiter sind die dritte Laserstrahlquelle 14c und die vierte Laserstrahlquelle 14d gegenüberliegend angeordnet, um die zwei weiteren entgegengesetzten Seiten des Drahtes 70 zu bearbeiten.

Die Laserstrahlquellen 64a-64d sind so angeordnet, dass ihre Laserstrahlen im Wesentlichen in einer Ebene angeordnet sind und in dem Bearbeitungsbereich 22 eintreten.

Die Blendeneinrichtung 16 weist jeweils Blenden 90a-90d zum Ausblenden der Laserstrahlen des ersten bis vierten Lasers 64a-64d auf.

Die Blenden 90a-90d sind als Wandbereiche des Hohlkörpers 42 des Schiebers 44 ausgebildet, wobei sich zu jeder Blende 90a-90d in Bewegungsrichtung des Schiebers 44 benachbart eine Strahlungsöffnung 92a-92d zum Durchlassen der entsprechenden Laserstrahlung befindet. Die erste Blende 90a und die zweite Blende 90b sind versetzt zueinander, so dass gegenüberliegend von der ersten Blende 90a die zweite Strahlungsöffnung 92b angeordnet ist, und gegenüberliegend der ersten Strahlungsöffnung 92a die zweite Blende 90b angeordnet ist. Die dritte Laserstrahlquelle 14c und die vierte Laserstrahlquelle 14d sind derart angeordnet, dass ihre Laserstrahlung um 90 Grad versetzt zu den Laserstrahlen der ersten und der zweiten Laserstrahlquelle 14a, 14b in den Bearbeitungsbereich 22 einstrahlt. Die dritte Blende 90c zum Ausblenden des dritten Laserstrahls der dritten Laserstrahlquelle 64c ist versetzt zu der vierten Blende 90d zum Ausblenden des vierten Laserstrahls der vierten Laserstrahlquelle 14d derart angeordnet, dass die dritte Strahlungsöffnung 92c der vierten Blende 90d gegenüberliegt und die vierte Strahlungsöffnung 92d der dritten Blende 90c gegenüberliegt.

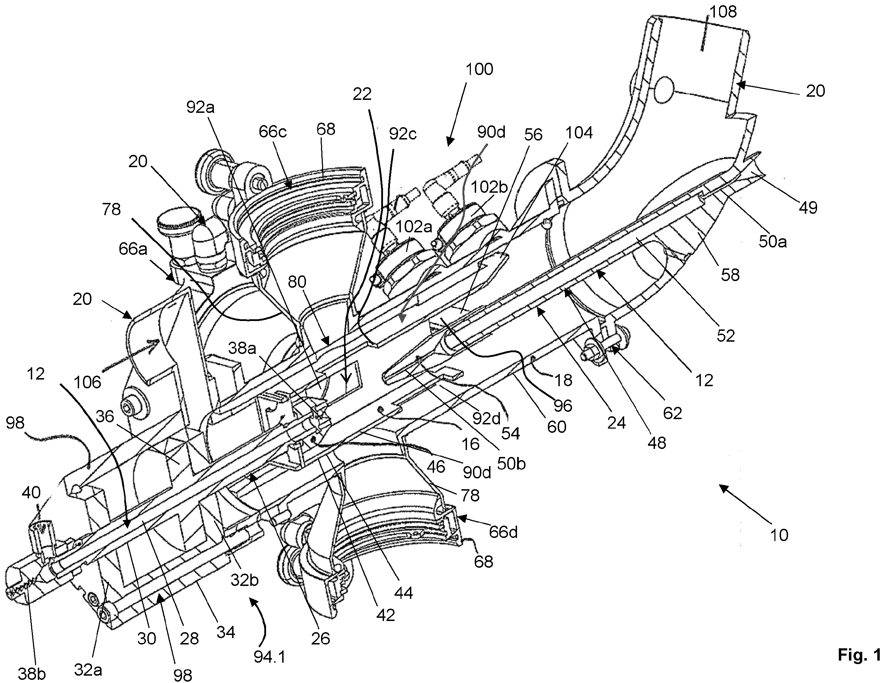

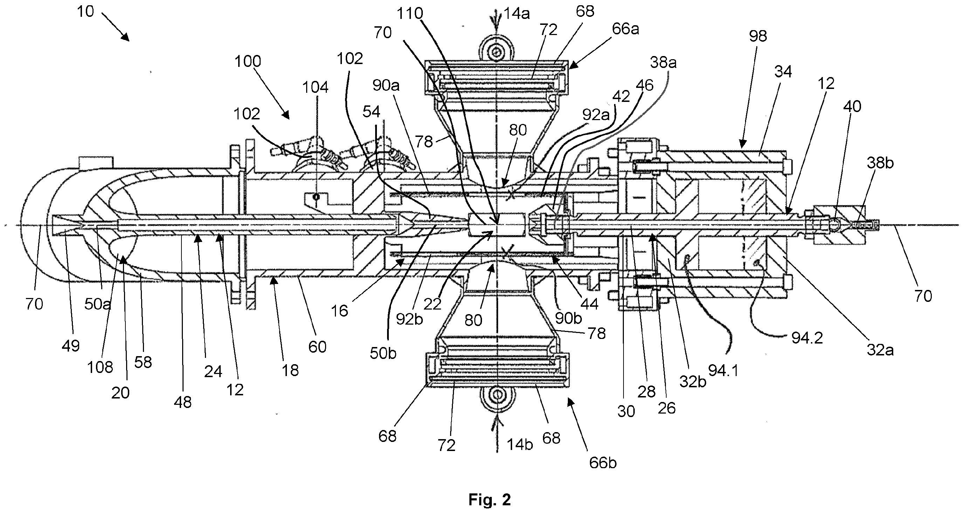

Der Schieber 44 ist, angetrieben über den Zylinder 34 und den Kolben 36, zwischen einer ersten Stellung 94.1, die in den Fig. 1 bis 3 dargestellt ist, und einer zweiten Stellung 94.2, die anhand der Stellung des Kolbens 36 gestrichtelt in Fig. 2 angedeutet und in den Fig. 5 bis 7 gezeigt ist, bewegbar. In der Wandung des Hohlkörpers 42 des Schiebers 44 sind die Strahlungsöffnungen 92a-92d und in Bewegungsrichtung benachbart hierzu, aber wie oben erläutert versetzt zueinander die Blende 90a-90d ausgebildet. Bei einer nicht näher dargestellten Ausgestaltung weist der Schieber 44 an dem dem Endabschnitt 58 des Hauptrohrs 18 zugewandten Ende wenigstens einen Längsschlitz, vorzugsweise einen ersten und einen zweiten Längsschlitz, auf der den jeweiligen Verbindungssteg 56 derart umgreift, dass der Schieber 44 durch den wenigstens einen Verbindungssteg 56 geführt wird. Bei der dargestellten Ausführung finden sich die Längsschlitze 96 zur Führung des Schiebers 44 in dem Hauptrohr 18, um Eckbereiche des Schiebers 44 zu führen. Somit werden die Blenden 90a-90d an der Drahtführungseinrichtung 12 und/oder dem Hauptrohr 18 beweglich geführt und durch die in diesem Ausführungsbeispiel als Zylinder 34 und Kolben 36 ausgebildete gemeinsame Blendenbewegungseinrichtung 98 gekoppelt zueinander gemeinsam bewegt.

Bei anderen, nicht gezeigten Ausführungen weist die Blendenbewegungseinrichtung einen anderen Aktor, z. B. Stellmotor oder dergleichen, auf.

Weiter ist wenigstens ein Positionssensor 100 zur unmittelbaren Erfassung der Position der Blenden 90a-90d vorgesehen.

Bei dem dargestellten Ausführungsbeispiel weist die Blendeneinrichtung 16 einen ersten Positionsschalter 102a und einen zweiten Positionsschalter 102b auf, die durch einen Schaltnocken 104, welcher an dem Schieber 44 ausgebildet ist, betätigt werden. Befindet sich der Schieber 44 in der ersten Stellung 94.1 wird der erste Positionsschalter 102a betätigt. Befindet sich der Schieber 44 in der zweiten Stellung 94.2 wird der zweite Positionsschalter 102b betätigt. In der ersten Stellung 94.1 ist die erste Strahlungsöffnung 92a mit der Einstrahlungsöffnung 80 für den ersten Laserstrahl der ersten Laserstrahlquelle 14a ausgerichtet, so dass der erste Laserstrahl in den Bearbeitungsbereich 22 durchgelassen wird, wobei die Einstrahlungsöffnung 80 für den zweiten Laserstrahl der zweiten Laserstrahlquelle 14b durch die zweite Blende 90b verschlossen ist. Weiter ist in der ersten Stellung 94.1 die dritte Strahlungsöffnung 92c mit der Einstrahlungsöffnung 80 für den dritten Laserstrahl des dritten Laserstrahlquelle 14c ausgerichtet, so dass der dritte Laserstrahl in den Bearbeitungsbereich 22 durchgelassen wird, während die entsprechende Einstrahlungsöffnung 80 für den vierten Laserstrahl der vierten Laserstrahlquelle 14d durch die vierte Blende 94d verschlossen ist. In der zweiten Stellung 94.2 werden entsprechend der zweite Laserstrahl und der vierte Laserstrahl in den Bearbeitungsbereich 22 durch die entsprechende Strahlungsöffnung 92b, 92d durchgelassen, während der erste Laserstrahl und der dritte Laserstrahl durch die zugeordnete Blende 90a, 90c ausgeblendet werden.

Das entsprechende Ausblenden des Laserstrahls des jeweils dem aktiven Laser gegenüberliegenden Lasers ist insbesondere in Fig. 2 dargestellt.

Im Folgenden wird die Strömungserzeugungseinrichtung 20 anhand der Darstellung in den beigefügten Figuren näher erläutert. Die Strömungserzeugungseinrichtung 20 dient zum Erzeugen eines Stromes eines Absaugmediums, wie insbesondere Luft, zur Entfernung von während der Laserbearbeitung entstehenden Partikeln aus dem Bearbeitungsbereich 22 sowie dem gesamten Hauptrohr 18.

Die Strömungserzeugungseinrichtung 20 weist einen Eingangskanal 106, insbesondere Zuluftkanal, und einen Ausgangskanal 108, insbesondere Abluftkanal, auf. Der Eingangskanal 106 befindet sich an einem ersten Ende des Hauptrohres 18, und der Abluftkanal 108 an dem entgegengesetzten zweiten Ende des Hauptrohrs 18. Somit bildet der Eingangskanal 106 einen Einlass des Hauptrohrs 18 und der Abluftkanal 108 einen Auslass des Hauptrohres 18.

Bei der dargestellten Ausführungsform ist der Eingangskanal 106 in Bewegungsrichtung des Drahtes 70 vor dem Bearbeitungsbereich 22 angeordnet, während der Abluftkanal 108 an dem Endabschnitt 58 in Drahtbewegungsrichtung nach dem Bearbeitungsbereich 22 angeordnet ist.

Das gasförmige Absaugmedium wird jedoch nicht nur durch den Eingangskanal 106 zugeleitet, kleinere Mengen werden auch durch die Ringdüsen 74 der jeweiligen Halteeinrichtung 66a-66d und durch den Sperrluftanschluss 40 zugeleitet. Die Ringdüsen 74 wirken so als weitere Einlässe des Hauptrohrs 18.

Der Abluftkanal 108 dient zum zentralen Ableiten des gesamten Absaugmediums und wird einer nicht dargestellten Partikelentsorgungseinrichtung zugeführt.

Mit der Laserbearbeitungsvorrichtung 10 lässt sich insbesondere das im Folgenden näher erläuterte Laserbearbeitungsverfahren durchführen.

Zu Beginn wird der Draht 70 durch die Drahtführungseinrichtung 12 hindurch gefädelt. Im Betrieb wird der Draht 70 durch die Drahtführungseinrichtung 12 taktweise bewegt, so dass pro Takt jeweils eine zu bearbeitende Stelle 110 des Drahtes 70 mit der Strahlungsebene, in der die Laserstrahlen der ersten bis vierten Laserstrahlquelle 14a-14d einstrahlen, ausgerichtet wird. Die Bewegung des Drahtes 70 wird angehalten. Der Schieber 44 befindet sich in der ersten Stellung 94.1. Die erste und die um 90 Grad benachbarte dritte Laserstrahlquelle 14a, 14c werden aktiviert, und ihre Laserstrahlen bearbeiten die entsprechenden Seiten der zu bearbeitenden Stelle 110 des Drahtes 70, während die Laserstrahlen der zweiten und vierten Laserstrahlquellen 94b, 94d durch die zugeordneten Blenden 90b, 90d ausgeblendet werden. Die zweiten Blende 90b und die vierte Blende 90d blenden hierbei nicht nur die Laserstrahlen der zugeordneten Laserstrahlquellen 94b, 94d aus, sondern verschließen die zugeordnete Einstrahlungsöffnung 80, so dass auch kein Laserstrahl aus den jeweils gegenüberliegenden Laserstrahlquellen 14a, 14c in die Strahlungsoptik einstrahlen kann und zudem keine Partikel in Richtung der Strahlungsoptik gelangen können.

Abplatzende Partikel werden zudem durch die Wirbelströmung an den Schutzgläsern 72 von den Schutzgläsern 72 - auch der jeweils aktiven Laserstrahlquelle 14a, 14c - ferngehalten. Die Schutzgläser 72 sind durch die Anordnung der flexiblen Umhüllung 78 axial so weit von dem Bearbeitungsbereich 22 entfernt, dass die Partikel bereits einen Großteil ihrer kinetischen Energie verloren haben und wirksam auch durch eine geringe Menge Zuluft durch die Ringdüsen 74 ferngehalten werden können und durch den Sog in Richtung Abluftkanal 108 abgesogen werden.

Die korrekte Position des Schiebers 44 wird dabei durch Abfrage des ersten Positionsschalters 102a überwacht. Ist der erste Positionsschalter 102a nicht aktiv, darf auch die entsprechende erste und dritte Laserstrahlquelle 14a, 14c nicht aktiviert werden.

Anschließend an die Laserbearbeitung durch den ersten und dritten Laserstrahl wird der Schieber 44 mittels des Kolbens 36 in die zweite Stellung 94.2 verfahren, was durch Aktivierung des zweiten Positionsschalters 102b abgefragt wird. Die erste und die dritte Laserstrahlquelle 14a, 14c werden deaktiviert, während die zweite und die vierte Laserstrahlquelle 94b, 94d aktiviert werden. Ihre Laserstrahlen strahlen dann durch die zweite Strahlungsöffnung 92b und die vierte Strahlungsöffnung 92d in den Bearbeitungsbereich 22, während die erste Blende 94a und die dritte Blende 94c die jeweilige Einstrahlungsöffnung 80 der ersten Laserstrahlquelle 14a und der dritten Laserstrahlquelle 14c verschließen und somit deren Laserstrahlen ausblenden. Auch hier werden wiederum abplatzende Partikel über den Absaugstrom im Hauptrohr 18 abgesaugt, wobei die Partikel durch die Zuluft über die Ringdüsen 74 von den Schutzgläsern 72 der aktiven Laserstrahlquellen 14b, 14d ferngehalten werden und durch die erste und dritte Blende 90a, 90c erst gar nicht zu den Schutzgläsern 72 der passiven Laserstrahlquellen 14a, 14c gelangen können.

Die Bewegung des Schiebers 44 sowie die nacheinander erfolgende Laserbearbeitung auf entgegengesetzten Seiten des Drahtes 70 erfolgt während eines Taktes, während der Draht 70 noch mit den Mundstücken 46, 54 in dem Bearbeitungsbereich 22 gehalten und positioniert wird.

Nach der Laserbearbeitung durch den zweiten und vierten Laserstrahl beginnt ein neuer Takt, der Schieber 44 wird wieder in die erste Stellung 94.1 bewegt und der Draht 70 wird entsprechend weiterbewegt, bis die nächste zu bearbeitende Stelle 110 in dem Bearbeitungsbereich 22 bewegt. Dann erfolgt die Laserbearbeitung gemäß der zuvor erläuterten Vorgehensweise erneut für diese neue zu bearbeitende Stelle 110.

### Bezugszeichenliste:

- 10: Laserbearbeitungsvorrichtung
- 12: Drahtführungseinrichtung
- 14a: erste Laserstrahlquelle
- 14b: zweite Laserstrahlquelle
- 14c: dritte Laserstrahlquelle
- 14d: vierte Laserstrahlquelle
- 16: Blendeneinrichtung
- 18: Hauptrohr
- 20: Strömungserzeugungseinrichtung
- 22: Bearbeitungsbereich
- 24: Drahtführungseinlauf
- 26: Drahtführungsauslauf
- 28: Drahtführungskanal (Auslauf)
- 30: Kolbenstange
- 32a: erste Führung
- 32b: zweite Führung
- 34: Zylinder
- 36: Kolben
- 38a: erster engerer Bereich (Auslauf)
- 38b: zweiter engerer Bereich (Auslauf)
- 40: Sperrluftanschluss
- 42: Hohlkörper
- 44: Schieber
- 46: Mundstück
- 48: Rohrbereich
- 49: trichterförmiger Einlaufbereich
- 50a: erster engerer Bereich (Einlauf)
- 50b: zweiter engerer Bereich (Einlauf)
- 52: Drahtführungskanal (Einlauf)
- 54: Führungsmundstück
- 56: Verbindungssteg
- 58: Endabschnitt
- 60: Zentralabschnitt
- 62: Schrauben
- 64a: erster Laser
- 64b: zweiter Laser
- 64c: dritter Laser
- 64d: vierter Laser
- 66a: erste Halteeinrichtung
- 66b: zweite Halteeinrichtung
- 66c: dritte Halteeinrichtung
- 66d: vierte Halteeinrichtung
- 68: Halter
- 70: Draht
- 72: Schutzglas
- 74: Ringdüse
- 76: Ringflansch
- 78: Umhüllung
- 80: Einstrahlungsöffnung
- 82: Dichtung für Schutzglas
- 83: Verschluss für Schutzglas
- 84: Schnellverschluss
- 86: Dichtung für Strahl-Werkzeug
- 88: Luftanschluss für Ringdüse
- 90a: erste Blende
- 90b: zweite Blende
- 90c: dritte Blende
- 90d: vierte Blende
- 92a: erste Strahlungsöffnung
- 92b: zweite Strahlungsöffnung
- 92c: dritte Strahlungsöffnung
- 92d: vierte Strahlungsöffnung
- 94.1: erste Stellung
- 94.2: zweite Stellung
- 96: Längsschlitz
- 98: Blendenbewegungseinrichtung
- 100: Positionssensor
- 102a: erster Positionsschalter
- 102b: zweiter Positonsschalter
- 104: Schaltnocken
- 106: Eingangskanal
- 108: Abluftkanal
- 110: zu bearbeitende Stelle

## Patentansprüche

1. Laserbearbeitungsvorrichtung (10) zur Laserbearbeitung eines Drahtes (70), mit
einer ersten Laserstrahlquelle (14a) zum Aussenden eines ersten Laserstrahls in einen Bearbeitungsbereich (22) zur Bearbeitung des Drahtes (70),
einer zweiten Laserstrahlquelle (14b) zum Aussenden eines zweiten Laserstrahls in den Bearbeitungsbereich (22) zur Bearbeitung des Drahtes (70),
wobei die erste Laserstrahlquelle (14a) und die zweite Laserstrahlquelle (14b) entgegengerichtet zueinander angeordnet sind, um den ersten und den zweiten Laserstrahl auf entgegengesetzte Seiten einer zu bearbeitenden Stelle (110) des Drahtes (70) zu richten, **gekennzeichnet durch**
eine Drahtführungseinrichtung (12) zum Führen des Drahtes (70) zwecks Bewegung des Drahtes (70) in seiner Längsrichtung **durch** den Bearbeitungsbereich (22) und Halten des Drahtes (70) während der Laserbearbeitung und
eine Blendeneinrichtung (16) mit einer ersten Blende (90a) und einer zweiten Blende (90b), die derart gekoppelt bewegbar sind, dass wechselweise einer des ersten und zweiten Laserstrahls in den Bearbeitungsbereich (22) durchgelassen und der andere ausgeblendet wird.

2. Laserbearbeitungsvorrichtung (10) nach Anspruch 1,
**gekennzeichnet durch**
eine dritte Laserstrahlquelle (14c) zum Aussenden eines dritten Laserstrahls in den Bearbeitungsbereich (22) zur Bearbeitung des Drahtes (70) und
eine vierte Laserstrahlquelle (14d) zum Aussenden eines vierten Laserstrahls in den Bearbeitungsbereich (22) zur Bearbeitung des Drahtes (70),
wobei die dritte Laserstrahlquelle (14c) und die vierte Laserstrahlquelle (14d) entgegengerichtet zueinander angeordnet sind, um den dritten und den vierten Laserstrahl auf weitere entgegengesetzte Seiten der zu bearbeitenden Stelle (110) des Drahtes (70) zu richten,
und wobei die Blendeneinrichtung (16) eine dritte Blende (90c) und eine vierte Blende (90d) aufweist, die derart gekoppelt bewegbar sind, dass wechselweise einer des dritten und vierten Laserstrahls in den Bearbeitungsbereich (22) durchgelassen und der andere ausgeblendet wird.

3. Laserbearbeitungsvorrichtung (10) nach Anspruch 2,
**gekennzeichnet durch** eines oder mehrere der folgenden Merkmale:
3.1 dass die erste bis vierte Laserstrahlquelle (14a-14d) derart angeordnet sind, dass der erste bis vierte Laserstrahl in einer Ebene in den Bearbeitungsbereich (22) strahlen;
3.2 dass die Anordnung aus erster und zweiter Laserstrahlquelle (14a, 14b) um einen Winkel von 45 bis 135 Grad, vorzugsweise 60 bis 120 Grad, insbesondere 90 Grad versetzt zu der Anordnung aus dritter und vierter Laserstrahlquelle (14c, 14d) sind.

4. Laserbearbeitungsvorrichtung (10) nach einem der voranstehenden Ansprüche,
**dadurch gekennzeichnet,**
**dass** die Blendeneinrichtung (16) wenigstens eines oder mehrere der folgenden Merkmale aufweist:
4.1 dass die Blenden (90a-90d) an einem bewegbaren Hohlkörper (42) ausgebildet sind, in dem Strahlungsöffnungen (92a-92d) zum Durchlassen des jeweiligen Laserstrahls versetzt zueinander angeordnet sind;
4.2 dass die Blenden (90a-90d) an einem bewegbaren Rohrkörper ausgebildet sind, in dem Strahlungsöffnungen (92a-92d) zum Durchlassen des jeweiligen Laserstrahls versetzt zueinander angeordnet sind,
4.3 dass die Blenden (90a-90d) durch eine Blendenbewegungseinrichtung (98) gemeinsam bewegbar sind;
4.4 dass die Blenden (90a-90d) an der Drahtführungseinrichtung (12) bewegbar geführt sind;
4.5 dass ein Positionssensor (100) oder ein erster und ein zweiter Positionssensor zum unmittelbaren Erfassen einer Position der Blenden (90a-90d) oder eines Hohlkörpers (42) oder Schiebers (44), an dem die Blenden (90a-90d) ausgebildet sind, vorgesehen sind.

5. Laserbearbeitungsvorrichtung (10) nach einem der voranstehenden Ansprüche, **dadurch gekennzeichnet**
**dass** die Blenden (90a-90d) an einem längs der Drahtbewegungsrichtung bewegbaren Schieber (44) ausgebildet sind;

6. Laserbearbeitungsvorrichtung (10) nach Anspruch 5,
**dadurch gekennzeichnet,**
**dass** die Blenden (90a-90d) an dem als Hohlkörper (42) ausgebildeten Schieber (44) angeordnet sind, der in Schieberbewegungsrichtung versetzt zueinander angeordnete Strahlungsöffnungen (92a-92d) für den jeweiligen Laserstrahl aufweist,
**dass** die Blendenbewegungseinrichtung (98) einen Zylinder (34) zur pneumatischen oder hydraulischen Betätigung mit einer Kolbenstange (30) aufweist, an der der Schieber (44) befestigt ist.

7. Laserbearbeitungsvorrichtung (10) nach einem der voranstehenden Ansprüche,
**gekennzeichnet durch**
ein Hauptrohr (18), in dem die Drahtführungseinrichtung (12), der Bearbeitungsbereich (22) und die Blendeneinrichtung (16) untergebracht sind, und eine Strömungserzeugungseinrichtung (20) zur Erzeugung einer Gasströmung durch das Hauptrohr (18).

8. Laserbearbeitungsvorrichtung (10) nach Anspruch 7,
**dadurch gekennzeichnet,**
**dass** die Drahtführungseinrichtung (12) an einem Endbereich des Hauptrohrs einen Drahtführungseinlauf (24) zum Einführen des Drahtes in das Hauptrohr (18) und an einem anderen Endbereich des Hauptrohrs einen Drahtführungsauslauf (26) zum Herausführen des Drahtes aus dem Hauptrohr (18) aufweist.

9. Laserbearbeitungsvorrichtung (10) nach Anspruch 7 oder Anspruch 8,
**dadurch gekennzeichnet,**
**dass** Schutzgläser (72) zum Durchführen des Laserstrahls zu dem Bearbeitungsbereich (22) vorgesehen sind und
9.1 dass die Strömungserzeugungseinrichtung (20) wenigstens eine Wirbeldüse zum Erzeugen eines Strömungswirbels an wenigstens einer Innenseite eines Schutzglases (72) aufweist und/oder
9.2 dass je eine kontrahierbare und expandierbare Umhüllung (78) zum Abdichten des Bereiches zwischen Schutzglas (72) und Bearbeitungsbereich (22) vorgesehen ist.

10. Laserbearbeitungsverfahren zur Laserbearbeitung eines Drahtes (70) **gekennzeichnet durch**:
taktweises Bewegen eines Drahtes (70) **durch** einen Bearbeitungsbereich (22), Ausrichten einer ersten Laserstrahlquelle (14a) zum Leiten eines ersten Laserstrahls auf eine erste Seite einer zu bearbeitenden Stelle (110) des Drahtes (70),
Ausrichten einer zweiten Laserstrahlquelle (14b) zum Leiten eines zweiten Laserstrahls auf eine der ersten Seite entgegengesetzte zweite Seite der zu bearbeitenden Stelle (110) des Drahtes (70), so dass der erste und der zweite Laserstrahl entgegengerichtet zueinander in den Bearbeitungsbereich (22) gerichtet sind,
Aussenden des ersten Laserstrahls und gleichzeitiges Ausblenden des zweiten Laserstrahls und danach Aussenden des zweiten Laserstrahls und Ausblenden des ersten Laserstrahls, wobei eine erste Blende (90a) und eine zweite Blende (90b) einer Blendeneinrichtung (16) gekoppelt bewegt werden, um wechselweise einen des ersten und des zweiten Laserstrahls in den Bearbeitungsbereich (22) durchzulassen und den anderen auszublenden.

11. Laserbearbeitungsverfahren nach Anspruch 10,
**dadurch gekennzeichnet,**
**dass** eine erste bis vierte Laserstrahlquelle (14a-14d) derart ausgerichtet werden,
**dass** ein erster bis vierter Laserstrahl in einer Ebene von verschiedenen Seiten auf den Draht (70) gerichtet werden, und
**dass** Laserstrahlen benachbarter Laserstrahlquellen (14a-14d) auf den Draht (70) ausgesandt werden, während die Laserstrahlen der jeweils gegenüberliegenden Laserstrahlquellen (14a-14d) ausgeblendet werden.

12. Laserbearbeitungsverfahren nach Anspruch 10 oder 11,
**dadurch gekennzeichnet,**
**dass** das taktweise Bewegen, das Ausblenden und das Bearbeiten in einem Hauptrohr (18) erfolgt, durch das hindurch eine Gasströmung geleitet oder erzeugt wird.

13. Laserbearbeitungsverfahren nach Anspruch 12,
**dadurch gekennzeichnet**,
13.1 dass das taktweise Bewegen des Drahtes mittels einer Drahtführungseinrichtung (12) geführt wird und dass eine Gasströmung durch das Hauptrohr (18) hindurch erzeugt wird, in dem der Bearbeitungsbereich (22), die Drahtführungseinrichtung (12) und die Blendeneinrichtung (16) untergebracht sind und/oder
13.2 dass der Draht (70) durch das Hauptrohr (18) hindurchgeführt wird und/oder
13.3 dass der Draht (70) an einem Endbereich des Hauptrohrs (18) in das Hauptrohr (18) eingeführt und an einem anderen Endbereich des Hauptrohrs (18) aus dem Hauptrohr (18) herausgeführt wird.

14. Laserbearbeitungsverfahren nach Anspruch 12 oder 13,
**dadurch gekennzeichnet,**
**dass** eine Beschichtung des Drahtes (70) mittels der Laserstrahlen entfernt wird und dass Partikel, die bei der Entfernung abplatzen, durch das Hauptrohr (18) abgesaugt werden.

15. Laserbearbeitungsverfahren nach Anspruch 14,
**dadurch gekennzeichnet,**
**dass** an wenigstens einem Schutzglas (72), durch das ein Laserstrahl eintritt, eine Wirbelströmung erzeugt wird, die in einen Absaugstrom eingeleitet wird.

## Claims

1. Laser processing device (10) for laser processing of a wire (70), the device comprising
a first laser beam source (14a) for emitting a first laser beam into a processing region (22) for processing the wire (70),
a second laser beam source (14b) for emitting a second laser beam into said processing region (22) for processing the wire (70),
wherein the first laser beam source (14a) and the second laser beam source (14b) are arranged in opposite directions to each other, in order to direct the first laser beam and the second laser beam to opposite sides of a point of the wire (70) to be processed, **characterized by**
a wire guide device (12) for guiding the wire (70) for movement of the wire (70) in its longitudinal direction through the processing region (22) and holding the wire (70) during laser processing, and
an aperture device (16) comprising a first aperture (90a) and a second aperture (90b) which can be moved in a coupled manner such that alternately one of the first and second laser beams is let through into the processing region (22) and the other is blocked out.

2. Laser processing device (10) according to claim 1,
**characterized by**
a third laser beam source (14c) for emitting a third laser beam into the processing region (22) for processing the wire (70), and a fourth laser beam source (14d) for emitting a fourth laser beam into the processing region (22) for processing the wire (70),
wherein the third laser beam source (14c) and the fourth laser beam source (14d) are arranged in opposite directions to each other, in order to direct the third and fourth laser beams to additional opposite sides of the point (110) of the wire (70) to be processed and
wherein the aperture device (16) comprises a third aperture (90c) and a fourth aperture (90d) which are movable in a coupled manner such that alternately one of the third and fourth laser beams is let through into the processing region (22) and the other is blocked out.

3. Laser processing device (10) according to claim 2,
**characterized by** one or more of the following features:
3.1 that the first to fourth laser beam sources (14a-14d) are arranged in such a way that the first to fourth laser beam sources radiate into the processing region (22) in one plane;
3.2 that the arrangement comprising the first and second laser beam sources (14a, 14b) are offset by an angle of 45 to 135 degrees, preferably of 60 to 120 degrees, more preferably of 90 degrees, to the arrangement comprising the third and fourth laser beam sources (14c, 14d).

4. Laser processing device (10) according to any one of the preceding claims,
**characterized by** the aperture device (16) comprising at least one or more of the following features:
4.1 that the apertures (90a-90d) are formed on a movable hollow body (42) in which radiation openings (92a-92d) for allowing the respective laser beam to pass through are arranged offset from each other;
4.2 that the apertures (90a-90d) are formed on a movable tubular body in which radiation openings (92a-92d) for allowing the respective laser beam to pass through are arranged offset from each other;
4.3 that the apertures (90a-90) are movable together by means of an aperture moving device (98);
4.4 that the apertures (90a-90d) are movably guided on the wire guide device (12);
4.5 that a position sensor (100) or a first and a second position sensor are provided for directly detecting a position of the apertures (90a-90d) or of a hollow body (42) or a slider (44) on which the apertures (90a-90d) are formed.

5. Laser processing device (10) according to any one of the preceding claims,
**characterized in that**
the apertures (90a-90d) are formed on a slider (44) movable along the direction of wire movement.

6. Laser processing device (10) according to claim 5,
**characterized in that**
the apertures (90a-90d) are arranged on the slider (44) designed as a hollow body (42) which includes radiation openings (92a-92d) for the respective laser beam which are arranged offset from each other in the slider movement direction,
the aperture movement device (98) comprises a cylinder (34) for pneumatic or hydraulic actuation including a piston rod (30) to which the slider (44) is fixed.

7. Laser processing device (10) according to any one of the preceding claims,
**characterized by**
a main pipe (18) in which the wire guide device (12), the processing region (22) and the aperture device (16) are accommodated, and
a flow generation device (20) for generating a gas flow through the main pipe (18).

8. Laser processing device (10) according to claim 7,
**characterized in that**
the wire guide device (12) comprises a wire guide inlet (24) for introducing the wire into the main pipe (18) at one end region of the main pipe and wire guide outlet (26) for leading the wire out from the main pipe (18) at another end region of the main pipe.

9. Laser processing device (10) according to claim 7 or claim 8, **characterized in that**
protective glasses (72) for passing through the laser beam to the processing region (22) are provided and
9.1 the flow generation device (20) comprises at least one vortex nozzle for producing a flow vortex on at least one inner side of a protective glass (72) and/or
9.2 a contractable and expandable envelope (78) for sealing the region between the protective glass (72) and the processing region (22) is provided in each case.

10. Laser processing method (10) for laser processing of a wire (70),
**characterized by**:
moving a wire (70) through a processing region (22) in cycles,
aligning a first laser beam source (14a) for directing a first laser beam to a first side of a point (110) of the wire (70) to be processed,
aligning a second laser beam source (14b) for directing a second laser beam to a second side of the point (110) of the wire (70) to be processed opposite the first side in such a way that the first and the second laser beams are directed into the processing region in opposite directions to each other,
emitting the first laser beam and simultaneously blocking out the second laser beam and thereafter emitting the second laser beam and blocking out the first laser beam, a first aperture (90a) and a second aperture (90b) of an aperture device (16) being moved in a coupled manner, in order to alternately let one of the first and second laser beams through into the processing region (22) and to block out the other.

11. Laser processing method according to claim 10,
**characterized in that**
a first to fourth laser beam source (14a-14d) are aligned in such way that the first to fourth laser beams are directed to the wire (70) from different sides in one plane and
laser beams from adjacent laser beam sources (14a-14d) are emitted to the wire (70) while laser beams from the respective opposing laser beam source (14a-14d) are blocked out.

12. Laser processing method according to claim 10 or 11,
**characterized in that**
the movement in cycles, the blocking out and the processing take place in the main pipe (18) through which a gas flow is directed or generated.

13. Laser processing method according to claim 12,
**characterized in that**
13.1 the movement of the wire in cycles is guided by a wire guide device (12) and a gas flow through the main pipe (18) is generated thereby, the processing region (22), the wire guide device (12) and the aperture device (16) being accommodated in the main pipe, and/or
13.2 the wire (70) is guided through the main pipe (18) and/or
13.3 the wire (70) is introduced into the main pipe (18) at an end region of the main pipe (18) and is guided out from the main pipe (18) at another end region of main pipe (18).

14. Laser processing method according to claim 12 or 13,
**characterized in that**
a coating of the wire (70) is removed by means of the laser beams and particles that flake off during this removing are sucked off through the main pipe (18).

15. Laser processing method according to claim 14,
**characterized in that**
at at least one protective glass (72), through which a laser beam enters, a vortex flow is generated that is introduced into the suction flow.

## Revendications

1. Dispositif de traitement au laser (10) pour le traitement au laser d'un fil (70), comprenant
une première source de faisceau laser (14a) pour émettre un premier faisceau laser dans une zone de traitement (22) pour traiter le fil (70),
une deuxième source de faisceau laser (14b) pour émettre un deuxième faisceau laser dans ladite région de traitement (22) pour traiter le fil (70),
dans lequel la première source de faisceau laser (14a) et la deuxième source de faisceau laser (14b) sont disposées dans des directions opposées l'une à l'autre, afin de diriger le premier faisceau laser et le deuxième faisceau laser vers des côtés opposés d'un point du fil (70) à traiter, **caractérisée par**
un dispositif de guidage de fil (12) destiné à guider le fil (70) dans sa direction longitudinale à travers la zone de traitement (22) et à maintenir le fil (70) pendant le traitement au laser, et
un dispositif d'ouverture (16) comprenant une première ouverture (90a) et une seconde ouverture (90b) qui peuvent être déplacées de manière couplée, de sorte qu'alternativement l'un des premiers et seconds faisceaux laser pénètre dans la zone de traitement (22) et l'autre est bloqué.

2. Dispositif de traitement au laser (10) selon la revendication 1,
**caractérisé par**
une troisième source de faisceau laser (14c) pour émettre un troisième faisceau laser dans la région de traitement (22) pour traiter le fil (70), et une quatrième source de faisceau laser (14d) pour émettre un quatrième faisceau laser dans la région de traitement (22) pour traiter le fil (70),
dans lequel la troisième source de faisceau laser (14c) et la quatrième source de faisceau laser (14d) sont disposées dans des directions opposées l'une à l'autre, afin de diriger les troisième et quatrième faisceaux laser vers des côtés opposés supplémentaires du point (110) du fil (70) à traiter et
dans lequel le dispositif d'ouverture (16) comprend une troisième ouverture (90c) et une quatrième ouverture (90d) qui sont mobiles de manière couplée, de sorte qu'alternativement l'un des troisième et quatrième faisceaux laser pénètre dans la zone de traitement (22) et l'autre est bloqué.

3. Dispositif de traitement au laser (10) selon la revendication 2,
**caractérisé par** une ou plusieurs des caractéristiques suivantes:
3.1 les sources de faisceaux laser (14a-14d) sont disposées de telle sorte que les sources de faisceaux laser (14a-14d) rayonnent dans la zone de traitement (22) dans un seul plan;
3.2 la disposition comprenant les première et deuxième sources de faisceau laser (14a, 14b) est décalée d'un angle de 45 à 135 degrés, de préférence de 60 à 120 degrés, plus préférablement de 90 degrés, par rapport à la disposition comprenant les troisième et quatrième sources de faisceau laser (14c, 14d).

4. Dispositif de traitement au laser (10) selon l'une quelconque des revendications précédentes,
**caractérisé en ce que** le dispositif d'ouverture (16) comprend au moins une ou plusieurs des caractéristiques suivantes:
4.1 les ouvertures (90a-90d) sont formées sur un corps creux mobile (42) dans lequel les ouvertures de rayonnement (92a-92d) sont disposées de manière décalée les unes par rapport aux autres pour laisser passer le faisceau laser respectif;
4.2 les ouvertures (90a-90d) sont formées sur un corps tubulaire mobile dans lequel les ouvertures de rayonnement (92a-92d) sont disposées de manière décalée les unes par rapport aux autres pour laisser passer le faisceau laser respectif;
4.3 les ouvertures (90a-90) peuvent être déplacées ensemble au moyen d'un dispositif de déplacement d'ouvertures (98);
4.4 les ouvertures (90a-90d) sont guidées de manière mobile sur le dispositif de guidage du fil (12);
4.5 un capteur de position (100) ou un premier et un second capteur de position sont prévus pour détecter directement la position des ouvertures (90a-90d) ou d'un corps creux (42) ou d'un curseur (44) sur lequel les ouvertures (90a-90d) sont formées.

5. Dispositif de traitement au laser (10) selon l'une quelconque des revendications précédentes,
**caractérisé en ce que**
les ouvertures (90a-90d) sont formées sur un curseur (44) mobile le long de la direction de déplacement du fil.

6. Dispositif de traitement au laser (10) selon la revendication 5,
**caractérisé en ce que**
les ouvertures (90a-90d) sont disposées sur le curseur (44) conçu comme un corps creux (42), curseur qui comprend des ouvertures de rayonnement (92a-92d) pour le faisceau laser respectif qui sont disposées de manière décalée les unes par rapport aux autres dans la direction de déplacement du curseur,
le dispositif de déplacement de l'ouverture (98) comprend un cylindre (34) pour l'actionnement pneumatique ou hydraulique comprenant une tige de piston (30) à laquelle le coulisseau (44) est fixé.

7. Dispositif de traitement au laser (10) selon l'une quelconque des revendications précédentes,
**caractérisé par**
un tube principal (18) dans lequel sont logés le dispositif de guidage de fil (12), la zone de traitement (22) et le dispositif d'ouverture (16), et
un dispositif de génération de flux (20) pour générer un flux de gaz à travers le tube principal (18).

8. Dispositif de traitement au laser (10) selon la revendication 7, **caractérisé en ce que**
le dispositif de guidage de fil (12) comprend une entrée de guidage de fil (24) pour introduire le fil dans le tube principal (18) à une extrémité du tube principal et une sortie de guidage de fil (26) pour faire sortir le fil du tube principal (18) à une autre extrémité du tube principal.

9. Dispositif de traitement au laser (10) selon la revendication 7 ou la revendication 8,
caractérisé ce que
des verres de protection (72) pour le passage du faisceau laser dans la zone de traitement (22) sont fournies et
9.1 le dispositif de génération de flux (20) comprend au moins une buse vortex pour produire un flux vortex sur au moins une face interne d'un verre de protection (72) et/ou
9.2 une enveloppe contractable et extensible (78) pour sceller la région entre le verre de protection (72) et la région de traitement (22) est prévue dans chaque cas.

10. Procédé de traitement au laser (10) pour le traitement au laser d'un fil (70),
**caractérisé par**
déplacer un fil (70) à travers une zone de traitement (22) en cycles, l'alignement d'une première source de faisceau laser (14a) pour diriger un premier faisceau laser vers un premier côté d'un point (110) du fil (70) à traiter, l'alignement d'une deuxième source de faisceau laser (14b) pour diriger un deuxième faisceau laser vers un deuxième côté du point (110) du fil (70) à traiter, opposé au premier côté, de manière à ce que le premier et le deuxième faisceau laser soient dirigés dans la zone de traitement dans des directions opposées l'une à l'autre,
en émettant le premier faisceau laser et en bloquant simultanément le second faisceau laser, puis en émettant le second faisceau laser et en bloquant le premier faisceau laser, une première ouverture (90a) et une seconde ouverture (90b) d'un dispositif d'ouverture (16) étant déplacées de manière couplée, afin de laisser passer alternativement l'un du premier et du second faisceau laser dans la zone de traitement (22) et d'en bloquer l'autre.

11. Procédé de traitement au laser selon la revendication 10,
**caractérisé en ce que**
une première à une quatrième source de faisceau laser (14a-14d) sont alignées de manière à ce que les premier à quatrième faisceaux laser soient dirigés vers le fil (70) à partir de différents côtés dans un même plan, et
les faisceaux laser des sources de faisceaux laser adjacentes (14a-14d) sont émis vers le fil (70) tandis que les faisceaux laser de la source de faisceaux laser opposée respective (14a-14d) sont bloqués.

12. Procédé de traitement au laser selon la revendication 10 ou 11,
**caractérisé en ce que**
le mouvement dans les cycles, le blocage et le traitement ont lieu dans le tube principal (18) à travers lequel un flux de gaz est dirigé ou généré.

13. Procédé de traitement au laser selon la revendication 12,
**caractérisé en ce que**
13.1 le mouvement du fil en cycles est guidé par un dispositif de guidage de fil (12) et un flux de gaz est ainsi généré à travers le tube principal (18), la zone de traitement (22), le dispositif de guidage de fil (12) et le dispositif d'ouverture (16) étant logés dans le tube principal, et/ou
13.2 le fil (70) est guidé à travers le tube principal (18) et/ou
13.3 le fil (70) est introduit dans le tube principal (18) à une extrémité du tube principal (18) et est guidé hors du tube principal (18) à une autre extrémité du tube principal (18).

14. Procédé de traitement au laser selon la revendication 12 ou 13, **caractérisé en ce que**
un revêtement du fil (70) est enlevé au moyen des faisceaux laser et les particules qui se détachent pendant cet enlèvement sont aspirées par le tube principal (18).

15. Procédé de traitement au laser selon la revendication 14,
**caractérisé en ce que**
au niveau d'au moins une verre de protection (72), à travers lequel un faisceau laser pénètre, un flux tourbillonnaire est généré et introduit dans le flux d'aspiration.
